# EUROPÄISCHE PATENTANMELDUNG

(11) **EP 2 357 388 A1**
(43) Veröffentlichungstag der Anmeldung: **17.08.2011**
(21) Anmeldenummer: 10405022.4
(22) Anmeldetag: 08.02.2010
(51) Int. Cl.: F16K 27/00

(54) **Ventilblock zum Steuern von Fluiden und Verwendung dieses Ventilblocks**

(71) Anmelder: Eugen Seitz AG, 8623 Wetzikon (CH)
(72) Erfinder: Janisch, Werner, 88696 Owingen Hohenbodman (DE)
(74) Vertreter: EGLI-EUROPEAN PATENT ATTORNEYS

(57) **Zusammenfassung**

Die Erfindung betrifft einen Ventilblock (V) zum Steuern von gasförmigen Fluiden (F), mit wenigstens einem den Block (V) durchtretenden Kanal (K) zum Leiten eines Fluids (F), und mit wenigstens einer entlang diesem Kanal (K) angeordneten Steuer- und/oder Messkomponente (C1, C2), die in einem an der Aussenseite des Blocks (V) ausgebildeten Sitz (S1, S2) aufgenommen ist, wobei dieser Sitz (S1, S2) über einen Durchgang (B1, B2) mit dem Kanal (K) kommuniziert, und zwischen der Komponente (C1, C2) und dem Sitz (S1, S2) eine Dichtung (D1, D2) vorgesehen ist, die ein Austreten des Fluids (F) verhindert. Die Erfindung ist dadurch gekennzeichnet, dass der Durchgang (B1, B2) und/oder der Sitz (S1, S2) eine kammerartige Erweiterung (E1, E2) aufweist, die entweder zwischen Dichtung (D1, D2) und Kanal (K) oder zwischen Dichtung (D1, D2) und einer Aussenfläche des Ventilblocks angeordnet ist. Die Erfindung betrifft weiterhin ein Speichersystem für Fluide (F) mit diesem Ventilblock (V) und einem Tank (T), ein Fahrzeug mit diesem Speichersystem, sowie spezifische Verwendungen des Ventilblocks (V).

## Beschreibung

Die Erfindung betrifft das technische Gebiet der Strömungstechnik und insbesondere einen Ventilblock zum Steuern von gasförmigen Fluiden nach Anspruch 1, ein Speichersystem für diese Fluide nach Anspruch 7 und ein Fahrzeug mit einem derartigen Speichersystem nach Anspruch 8. Die Erfindung betrifft weiterhin die spezifische Verwendung des Ventilblocks nach Anspruch 9.

Beim Durchströmen von Ventilblöcken werden gasförmige Fluide üblicherweise beschleunigt und dabei dekomprimiert. Bei stark gekühlten gasförmigen Fluiden werden dabei Temperaturen von unter -40 °C erreicht. Diese Temperaturen werden auf den Ventilblock und damit auf alle darin integrierten Komponenten übertragen. Dadurch können Dichtungen aus einem Elastomer- oder Kunststoffmaterial undicht werden, die zum Abdichten der Komponenten des Blocks oder seiner Peripherie notwendig sind.

Die Aufgabe der vorliegenden Erfindung besteht darin, dieses Problem zu lösen und einen leistungsfähigeren Ventilblock anzugeben, der selbst beim Steuern von stark gekühlten gasförmigen Fluiden zuverlässig arbeitet und insbesondere dicht ist, und der zudem kostengünstig und einfach herstellbar ist.

Diese Aufgabe wird durch einen Ventilblock des Anspruchs 1 gelöst. Die darin bezeichnete kammerartige Erweiterung soll im Folgenden auch als 'thermische Kammer' bezeichnet werden. Diese thermische Kammer stellt ein Element dar, das geometrisch in einen Ventilblock eingebracht wird und eine kleine Verbindung zu dem strömenden gasförmigen Fluid hat. Die kleine Verbindung sorgt dabei dafür, dass kein grösserer Temperaturaustausch mit dem (kalten) strömenden Fluid stattfinden kann. Die Kammer wird während eines Steuerungsvorgangs gefüllt und das in ihr befindliche Fluid komprimiert und damit erwärmt. Der Ventilblock aus einem Metall wird zwar durch das strömende Fluid abgekühlt, aber die thermische Kammer isoliert partiell die 'zu schützende' Dichtung und erwärmt diesen Teilbereich noch. Die an der Dichtung ankommende Temperatur ist damit nicht ganz so tief wie sie ohne die thermische Kammer gewesen wäre. Dies reicht aus, um Temperaturen von unter -40 °C mit herkömmlichen 'Standarddichtungen' zu erreichen.

Ein zwischen der Dichtung und einer Aussenfläche des Ventilblocks angeordnete Erweiterung oder thermische Kammer kann alternativ oder auch zusätzlich vorgesehen sein. Auch diese Kammer kann über den Durchgang mit dem Kanal verbunden sein und stellt ein Volumen des Fluids zur Verfügung, das während des Steuervorgangs komprimiert und damit erwärmt wird. Der Austausch dieses Volumens über den Durchgang hinweg ist so stark eingeschränkt, dass dieses Volumen auch bei starker Abkühlung des umgebenden Materials warm bleibt und die Dichtungen schützt. Die Kammer kann aber auch mit Aussenluft beflutet werden und deren Wärme in den Bereich der Dichtungen hinein abstrahlen. Alternativ oder zusätzlich kann auch eine aktive Wärmung vorgesehen sein, z.B. durch eingeblasene Warmluft oder ein in der Kammer angeordnetes Heizelement wie eine elektrische Heizspule. In jedem Fall sorgt die eingebrachte Wärme dafür, dass sich die Dichtungen auch bei Anbringung einer thermischen Kammer zwischen Dichtungen und Aussenfläche des Blocks bei weitem nicht so sehr abkühlen wie ohne den thermischen Einfluss der Kammer.

Vorteilhafte Weiterbildungen des erfindungsgemässen Blocks sind in den Unteransprüchen angegeben.

In einer bevorzugten Ausführungsform ist dabei vorgesehen, dass die kammerartige Erweiterung ein grösseres Volumen als der Durchgang aufweist. Ein Austausch dieses Erweiterungsvolumens über den Durchgang wird damit erheblich verzögert, so dass eine schnelle Abkühlung ausgeschlossen ist. Die Erweiterung wirkt damit wie ein Dämmkissen, das die Kälte von den Dichtungen fernhält.

Grundsätzlich kann die kammerartige Erweiterung wie auch der Durchgang jede beliebige Form, insbesondere jede für die Funktion der Steuer- und/oder Messkomponenten geeignete Querschnittsform aufweisen. Eine besonders einfache Anbringung ist aber dadurch gewährleistet, wenn der Durchgang als Bohrung ausgeführt ist und die Erweiterung eine zur Längsachse dieser Bohrung radialsymetrische Form aufweist. Eine solche Form ist z.B. leicht durch ein geeignetes Bohr- oder Fräswerkzeug herstellbar, das vor oder nach dem Anbringen der Bohrung eingewechselt wird. Bei Herstellung des Ventilblocks aus einem Gussmaterial kann die Erweiterung allerdings auch schon durch einen geeigneten Gusskern vorgegeben sein, womit auch Hinterschnitte im Material darstellbar sind.

Eine besonders gute thermische Abschirmung der Dichtungen wird dadurch erzielt, dass die Erweiterung einen 2 bis 5-fach grösseren Durchmesser als der Durchgang aufweist. Der Wärmeabfluss wird damit in Materialbereiche des Ventilblocks verschoben, die dem Sitz der Steuer- und/oder Messkomponenten und damit den Dichtungen fern liegen. Damit sinkt das Temperaturgefälle zwischen Dichtungen und kältestem Materialanteil des Ventilblocks, wodurch den Dichtungen die Wärme deutlich langsamer entzogen wird. Deren Funktionalität bleibt deshalb deutlich länger gewährleistet.

Üblicherweis müssen Ventilblöcke, die extremer Kälte ausgesetzt sind, mit geeigneten Dichtungen ausgestattet werden. Diese werden allerdings bei Temperaturschwankungen über ihren Einsatzbereich hinaus ebenfalls leicht undicht und sind darüber hinaus teuer. Bei dem erfindungsgemässen Ventilblock ist es dagegen bevorzugt, wenn die jeweilige Dichtung gerade aus einem (herkömmlichen) Elastomer- oder Kunststoffmaterial besteht. Denn die für solche Art von Dichtungen kritischen Temperaturbereiche werden mit dem erfindungsgemässen Ventilblock erst gar nicht erreicht, so dass deren volle Leistungsfähigkeit bestehen bleibt.

Von Vorteil ist es, wenn die Komponenten wenigstens einen Druck-, einen Temperatursensor und/oder ein Ventil umfassen. Damit kann ein Massenstrom des gasförmigen Fluids bestimmt und geregelt werden, deren Temperatur auf die Leistungsfähigkeit der thermischen Kammer abgestimmt ist.

Die vorliegenden Aufgabe wird auch durch ein Speichersystem für gasförmige Fluide nach Anspruch 8 gelöst.

Auch in diesem Speichersystem arbeitet der erfindungsgemässe Ventilblock besonders zuverlässig, da das Befüllen des Tanks üblicherweise schneller und mit grösserem Massenstrom verläuft als das Entleeren. In der Folge ist der Temperaturabfall des gekühlten gasförmigen Fluids in dem Ventilblock beim Befüllen des Tanks deutlich höher als beim Entnehmen des inzwischen erwärmten Fluids aus dem Tank. Kritisch für die Haltbarkeit der Dichtungen ist also der Betankungsvorgang, der aber durch die dämpfenden (und optional abschirmenden) thermischen Kammern entschärft wird.

Die vorstehende Aufgabe wird zudem durch ein Fahrzeug mit einem Speichersystem für gasförmige Fluide nach Anspruch 8 gelöst.

An Speichersysteme, die in Fahrzeugen verbaut sind, bestehen üblicherweise erhöhte Sicherheitsanforderungen. So darf gleichsam von Betankung wie auch Entnahme des gasförmigen Fluids keine Gefahr ausgehen. Eine zuverlässige Betankung ist durch den erfindungsgemässen Ventilblock wie vorstehenden beschrieben gewährleistet, während die Entnahme auf Grund des geringeren Massenstroms zum Brennkraftmotor oder der Brennstoffzelle unkritischer ist.

Der erfindungsgemässe Ventilblock soll bevorzugt zum Steuern des Befüllens und/oder Entleerens eines Tanks mit gekühlten gasförmigen Fluiden, insbesondere mit einem Brenngas wie Wasserstoff oder Erdgas verwendet werden. Der Block erfüllt seine erfindungsgemässe Funktion aber auch ohne weiteres bei Verwendung eines Fluids wie Helium. Gerade bei Dekompression dieser Fluide sind in dem Ventilblock sehr niedrige Temperaturen zu erwarten. Diese können ausgehend von einem Druckniveau der Fluide von zwischen 300 bar (Erdgas) und 750 bar (Wasserstoff) und einer heruntergekühlten Temperatur von -40 °C schliesslich bis zu -80 °C erreichen. Dank der thermischen Kammern bleibt aber die Leistungsfähigkeit des Blocks auch bei derart niedrigen Temperaturen erhalten und seine Dichtungen unbeschädigt.

Auf Grund all dieser Vorteile soll der erfindungsgemässe Ventilblock bevorzugt zum Befüllen und/oder Entleeren des Tanks eines Fahrzeugs dienen.

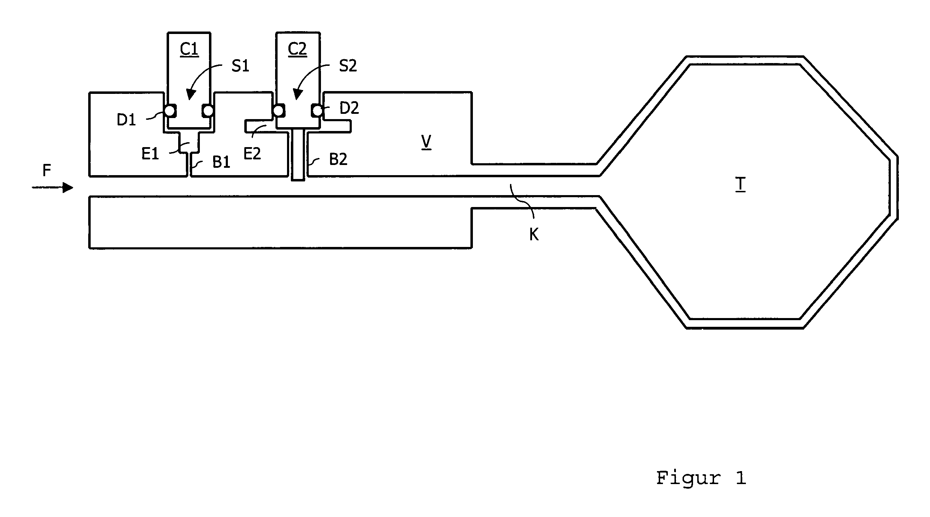

Die Erfindung wird in der Folge im Detail und unter Bezugnahme auf die beiliegende Figur 1 beschrieben. Diese zeigt ein Speichersystem für gekühlte gasförmige Fluide F mit einem erfindungsgemässen Ventilblock V, der mit einem Tank T zum Aufnehmen der Fluide F gekoppelt ist. Im vorliegenden Fall soll gekühlter Wasserstoff mit einem Druck von 750 Bar und einer Temperatur von -40 °C betankt werden, der beim Durchströmen eines Kanals K des Blocks V dekomprimiert wird, wodurch er eine Temperatur von -80 °C erreicht. In dem Tank T wiederum wird der Wasserstoff komprimiert, wodurch seine Temperatur wieder ansteigt und mit zunehmender Befüllung ein Druck von ungefähr 850 bar herrscht. Im Zuge dieses Betankungsprozesses kühlt das Material des Blocks V stark ab, was sich auf Dichtungen D1, D2 auswirkt, die Steuer- und Messkomponenten C1, C2 gegen deren Sitz S1, S2 in dem Block V abdichten. In diesem Beispiel soll es sich bei der Komponente C1 um eine Druck- und bei der Komponente C2 um einen Temperatursensor handeln, die zur Bestimmung eines Massenstroms in dem Block vorgesehen sind. Die Komponenten müssen dazu einen entsprechenden Durchgang B1, B2 zu dem Kanal K aufweisen, der hier als Bohrung ausgebildet ist. Bei der Abkühlung des Blocks V vom Kanal K her wird den Dichtungen D1, D2 sowohl über die Durchgänge bzw. Bohrungen B1, B2 als auch über das den Sitz S1, S2 umgebende Material des Blocks V Wärme entzogen. Bei entsprechender Abkühlung in deren Bereich ziehen sie sich stark zusammen, werden spröde und lassen Fluid F in die Umgebung des Blocks V austreten.

Dies wird erfindungsgemäss durch die dem Sitz S1 vorgelagerten bzw. am Übergang der Bohrung B2 zum Sitz S2 angebrachten Erweiterungen oder thermischen Kammern E1, E2 verhindert. So bildet die Kammer E1 ein grosses Volumen vor dem Drucksensor C1 aus, das thermisch dämpfend wirkt, weil es über die enge Bohrung B1 mit deutlich kleinerem Volumen nur äusserst langsam austauschbar ist. Dadurch entsteht ein thermisches Kissen, das die Dichtung D1 vor Abkühlung schützt und deren Funktion auch bei Temperaturen des gasförmigen Fluids von -80 °C im Kanal K garantiert. Im Fall des parallel zum Drucksensor C1 liegenden Temperatursensors C2 ist nicht nur eine Kammer E2 mit im Vergleich zur Bohrung B2 grösseren Volumen angebracht, sondern auch deren Form so gewählt, dass eine Abschirmung der Dichtung D2 gewährleistet ist. Ein derart angeordnetes und gestaltetes thermisches Kissen sorgt für einen Wärmeabfluss aus möglichst weit von dem Sitz S2 entfernten Materialbereichen des Blocks V, so dass die dort anliegende Dichtung D2 eine deutlich langsamere Abkühlung erfährt. Da auch die Betankung des Tanks T bei hohem Massenstrom des Fluids F eine lediglich kurze Zeit in Anspruch nimmt, ist eine Beschädigung der Dichtungen D1 und D2 hinter den thermischen Kammern ausgeschlossen. Diese können sogar aus einem herkömmlichen kostengünstigen Elastomer- oder Kunststoffmaterial ausgeführt sein.

Das Entleeren des Tanks T vollzieht sich üblicherweise bei geringem Massenstrom des gasförmigen Fluids F über einen längeren Zeitraum hinweg. Die dabei erreichten Temperaturen im Kanal K sind in diesem Fall unkritisch für die Dichtungen D1 und D2.

Idealerweise wird das gezeigte und beschriebene Speichersystem für gasförmige Fluide in einem Fahrzeug eingesetzt, dessen Brennkraftmotor z.B. mit Erdgas bzw. Autogas, oder dessen Brennstoffzelle mit Wasserstoff zu versorgen ist. Der Ventilblock mit thermischer Dämmung der Dichtungen D1, D2 arbeitet dabei gleichsam bei Betankung und Entleerung des Tanks T zuverlässig, da eine potentielle Leckage wirksam verhindert ist. Die thermischen Kammern E1, E2 sind fertigungstechnisch einfach anzubringen und kostengünstig realisierbar. Durch Einsatz herkömmlicher Dichtungen im Bereich der Sitze S1, S2 entstehen keine zusätzlichen Kosten. Insgesamt stellt der erfindungsgemäss Ventilblock V damit ein leistungsfähiges Steuerinstrument für gekühlte gasförmige Fluide dar.

## Patentansprüche

1. Ventilblock (V) zum Steuern von gasförmigen Fluiden (F), mit wenigstens einem den Block (V) durchtretenden Kanal (K) zum Leiten eines Fluids (F), und mit wenigstens einer entlang diesem Kanal (K) angeordneten Steuer- und/oder Messkomponente (C1, C2), die in einem an der Aussenseite des Blocks (V) ausgebildeten Sitz (S1, S2) aufgenommen ist, wobei dieser Sitz (S1, S2) über einen Durchgang (B1, B2) mit dem Kanal (K) kommuniziert, und zwischen der Komponente (C1, C2) und dem Sitz (S1, S2) eine Dichtung (D1, D2) vorgesehen ist, die ein Austreten des Fluids (F) verhindert, **dadurch gekennzeichnet, dass** der Durchgang (B1, B2) und/oder der Sitz (S1, S2) eine kammerartige Erweiterung (E1, E2) aufweist, die entweder zwischen Dichtung (D1, D2) und Kanal (K) oder zwischen Dichtung (D1, D2) und einer Aussenfläche des Ventilblocks angeordnet ist.

2. Ventilblock (V) nach Anspruch 1, bei dem die kammerartige Erweiterung (E1, E2) ein grösseres Volumen als der Durchgang (B1, B2) aufweist.

3. Ventilblock (V) nach Anspruch 1 oder 2, bei dem der Durchgang (B1, B2) als Bohrung ausgeführt ist und die kammerartige Erweiterung (E1, E2) eine zur Längsachse dieser Bohrung radialsymetrische Form aufweist.

4. Ventilblock (V) nach einem der vorstehenden Ansprüche, bei dem die Erweiterung (E1, E2) einen 2 bis 5-fach grösseren Durchmesser als der Durchgang (B1, B2) aufweist.

5. Ventilblock (V) nach einem der vorstehenden Ansprüche, bei dem die jeweilige Dichtung (D1, D2) aus einem Elastomer- oder Kunststoffmaterial besteht.

6. Ventilblock (V) nach einem der vorstehenden Ansprüche, bei dem die Komponenten (C1, C2) wenigstens einen Druck-, einen Temperatursensor und/oder ein Ventil umfassen.

7. Speichersystem für gasförmige Fluide (F) mit einem Ventilblock (V) nach einem der vorstehenden Ansprüche und einem damit gekoppelten Tank (T) zum Aufnehmen der Fluide (F).

8. Fahrzeug mit einem Speichersystem für gasförmige Fluide (F) nach Anspruch 7 und einem damit gekoppelten Brennkraftmotor oder einer Brennstoffzelle zum Antreiben des Fahrzeugs.

9. Verwendung eines Ventilblocks (V) nach einem der vorstehenden Ansprüche zum Steuern des Befüllens und/oder Entleerens eines Tanks (T) mit gekühlten gasförmigen Fluiden (F), insbesondere mit einem Brenngas wie Wasserstoff oder Erdgas.

10. Verwendung eines Ventilblocks (V) nach Anspruch 9, bei dem die gekühlten gasförmigen Fluide (F) einen Ausgangsdruck von 300 bis 750 bar und eine dabei erreichte Abkühlung bis zu einer Temperatur von -40 °C aufweisen.

11. Verwendung eines Ventilblocks (V) nach Anspruch 9 oder 10 zum Befüllen und/oder Entleeren des Tanks (T) eines Fahrzeugs.
